# EUROPÄISCHE PATENTSCHRIFT

(11) **EP 0 930 018 B1**
(45) Veröffentlichungstag und Bekanntmachung des Hinweises auf die Patenterteilung: **06.06.2001**
(21) Anmeldenummer: 98121529.6
(22) Anmeldetag: 17.11.1998
(51) Int. Cl.: A23L 1/221, A23G 3/00, A23G 9/02, A23L 1/06, A23L 1/275

(54) **Safran oder Safranbestandteile enthaltende Zusammensetzungen, Verfahren zur Herstellung derselben und Verwendungen derselben**
Compositions containing saffron or components of saffron, method for preparing them and their uses
Compositions comprenant du safran ou des composants du safran, procédé pour les préparer et leurs applications

(30) Priorität: 14.01.1998 DE 19801151
(43) Veröffentlichungstag der Anmeldung: 21.07.1999
(73) Patentinhaber: Rohmeder, Jürgen, Dr., 3982 Bitsch (CH)
(72) Erfinder: Rohmeder, Jürgen, Dr., 3982 Bitsch (CH)
(74) Vertreter: Abitz, Walter, Dr.-Ing.

(56) Entgegenhaltungen:
- WO-A-88/00796
- DE-C- 19 633 393
- GB-A- 2 012 547
- G.E.INGLETT: "Symposium:Sweeteners" 1974 , AVI , WESTPORT XP002108560 Seite 118 - Seite 122 * Seite 119; Tabelle 10.4 * * Seite 120; Tabelle 10.5 * * Seite 121, Absatz 6 - Seite 122, Absatz 1 *

## Beschreibung

Die vorliegende Erfindung betrifft eine Safran und/oder Safranbestandteile enthaltende Zusammensetzung, diese Zusammensetzung enthaltende Schokoladen, Schokoladenerzeugnisse, Bonbons, Kuchen, Torten, Konditoreierzeugnisse, Süßwaren, Gelees, Marmeladen, Konfitüren, Aspike, Essige und sonstige Lebensmittel sowie Verfahren zu ihrer Herstellung.

Safran enthaltende Kuchen sind ebenso bekannt (siehe E. Ziegler, Die natürlichen und künstlichen Aromen, Seite 91, Dr. Alfred Hüthig Verlag Heidelberg, 1982) wie Safran enthaltendes Backwerk (siehe Römpp Chemie Lexikon, 9. Auflage, Band 5, 1992, Seite 3965, Stichwort: Safran). Dabei wird der Safran jedoch vorwiegend zum Gelbfärben eingesetzt und nicht wegen seines Eigengeschmacks (siehe Römpp Chemie Lexikon, 9. Auflage, Seite 3965).

Die WO-A-88/00796 beschreibt Honigzusammensetzungen, die neben einem Stabilisator und einem Quellmittel 0,01 bis 0,5 Gew.-% Safranderivate enthalten können, wobei zu berücksichtigen ist, daß gemäß dem Artikel von G. E. Inglett "Sweeteners" 1974, AVI, Westport, XP002108560 Honigsorten in der Regel variierende Mengen an Fructose, Glucose und Maltose enthalten. In der WO-A-88/00796 werden die Safranderivate wiederum als Lebensmittelfarbstoffe und nicht wegen ihres Eigengeschmacks eingesetzt.

Die GB-A-2 012 547 lehrt den Einsatz von Safranextrakt ebenfalls zum Färben, nämlich von Getränkelösungen, die u.a. ein Zuckersirupkonzentrat enthalten.

Weiterhin sind Safran-Backaromen bekannt (siehe A.M. Burger, Die natürlichen und künstlichen Aromen, Seite 207, Dr. Alfred Hüthig Verlag Heidelberg, 1968). In den Sortimenten von Aromen-Herstellern werden auch Safran-Aromen angeboten, die z.B. durch Extraktion, Gefriertrocknung und Vermischen mit Glucose hergestellt werden. Zur Herstellung von Essenzen und Süßwaren sind diese Fertigaromen jedoch wenig geeignet. Diese Aromen verleihen den mit ihnen versetzten Produkten lediglich eine zusätzliche, den Hauptgeschmack nicht tragende Geschmacksnote, weil zur Verleihung eines prägenden, vorherrschenden Safran-Hauptgeschmacks sehr große Aromenmengen und somit sehr große Safranmengen notwendig wären. Dies ist jedoch aus Kostengründen nicht akzeptabel, da Safran einen hohen Marktpreis hat (siehe Römpp Chemie Lexikon, 9. Auflage, Seite 3965). Darüber hinaus vermögen die bekannten Safranaromen festen Lebensmittel-Zubereitungen, wie etwa Schokoladenprodukten oder Bonbons, keine kräftige, klare gelbe Färbung zu verleihen.

Ein "Vinaigre de vin blanc au Safran" (Hersteller: Paul Corcellet, TVM 5, Rue de Valmy, F-51100 Reims) ist käuflich erhältlich, enthält Safranfäden (ca. 1,2 g pro Liter), schmeckt jedoch fast nicht nach Safran und ist nur schwach gelb.

Die nicht vorveröffentlichte DE-A-196 33 393 beschreibt unter anderem eine Spirituose, die eine Zusammensetzung aus Safranbestandteilen, einem oder mehreren Monosacchariden mit mindestens vier Kohlenstoffatomen, z.B. Glucose oder Fructose, und Ethanol sowie Wasser und (das nichtreduzierende Disaccharid) Saccharose umfaßt.

Die vorliegende Erfindung stellt sich die Aufgabe, Safran enthaltende Zusammensetzungen und Produkte zur Verfügung zu stellen, bei denen der Safrangeschmack im Vergleich zu üblichen Safran enthaltenden Zusammensetzungen und Produkten intensiver ist.

Diese Aufgabe wird durch Zusammensetzungen gelöst, die neben Safran und/oder Safranbestandteilen sowie einem oder mehreren Monosacchariden mit mindestens vier Kohlenstoffatomen wenigstens ein reduzierendes Disaccharid enthalten, jedoch mit Ausnahme von Honigzusammensetzungen, die mindestens einen Stabilisator, mindestens ein Quellmittel und 0,01 bis 0,5 Gewichtsprozent (bezogen auf den Ausgangshonig) Safranderivate enthalten und deren Dichte 0,7 oder kleiner ist, sowie durch Schokoladen, Schokoladenerzeugnisse, Bonbons, Kuchen, Torten, Konditoreierzeugnisse, Süßwaren, Gelees, Marmeladen, Konfitüren, Aspike, Essige und sonstige Lebensmittel, die die erfindungsgemäße Zusammensetzung enthalten.

Es wurde überraschend festgestellt, daß die die erfindungsgemäße Zusammensetzung enthaltenden Schokoladen, Schokoladen-erzeugnisse, Bonbons, Kuchen, Torten, Konditoreierzeugnisse Süßwaren, Gelees, Marmeladen, Konfitüren, Aspike, Essige oder sonstigen Lebensmittel einen intensiven Safrangeschmack aufweisen. Im Gegensatz dazu muß bei der Verwendung von Safran-aromen, die andere Saccharide anstelle des reduzierenden Disaccharids der erfindungsgemäßen Zusammensetzung enthalten, 2,5- bis 5mal mehr Safran eingesetzt werden, um dieselbe Geschmacksintensität zu erzielen, d.h. mit den erfindungsgemäßen Zusammensetzungen werden 60 - 80% Safran eingespart. Durch die Verwendung von reduzierenden Disacchariden anstelle von nichtreduzierenden Disacchariden wird also eine erhebliche Menge des teuren Safrans eingespart, so daß nunmehr auch Essige, Süßwaren, Konditoreierzeugnisse, Torten, Kuchen, Gelees., Konfitüren, Marmeladen, Aspike, Bonbons, Schokoladen-erzeugnisse, Schokoladen und sonstige Lebensmittel mit der Hauptgeschmacksnote Safran für den Verbraucher zu annehmbaren Preisen zur Verfügung gestellt werden können.

Weiterhin können durch die Verwendung der erfindungsgemäßen Zusammensetzungen nunmehr auch safranhaltige feste Lebensmittelzubereitungen, wie z.B. Schokoladen, Bonbons usw., mit klarer kräftiger gelber Färbung bereitgestellt werden, die außerdem auch einen extrem langen Nachgeschmack haben.

Der Vorteil der Geschmacksintensivierung ist bei den mit den erfindungsgemäßen Zusammensetzungen hergestellten Produkten, die mit Ausnahme von Bonbons in ihren Safran enthaltenden Teilen normalerweise keine Saccharose enthalten, in der Regel nicht mit dem Nachteil eines Verlusts an Süße auf Grund der gegenüber üblichen Safranaromen fehlenden Saccharose verbunden. Beispielsweise hat, im Vergleich zu Saccharose (100 %), das Monosaccharid Fructose eine Süße von 173% und das reduzierende Disaccharid Lactose eine Süße von 16% (Nutrition and Diet Therapy Reference Dictionary, 4. Ausgabe, Chapman & Hill, 1995, S. 332, Stichwort: "Sweetener"), so daß mit den erfindungsgemäßen Zusammensetzungen, die z.B. Fructose als Monosaccharid und Lactose als reduzierendes Disaccharid enthalten, gleiche Süßen wie mit der gleich schweren Menge an Saccharose erzielt werden können. Andererseits kann durch entsprechendes Einstellen der Mono- und Disaccharidmengen die Süße der erfindungsgemäßen Zusammensetzungen gegenüber der Saccharose enthaltenden Zusammensetzung leicht variiert werden, d.h. die erfindungsgemäßen Zusammensetzungen süßer oder weniger süß gemacht werden.

Die erfindungsgemäßen Zusammensetzungen enthalten Safran und/oder Safranbestandteile, z.B. Blütennarben, insbesondere die getrockneten, aromatisch riechenden, üblicherweise roten Teile der Blütennarben der Safranpflanze, Safranfäden oder durch herkömmliche Verfahren, beispielsweise Extraktion, gewonnene Safraninhaltsstoffe. Bei den eingesetzten Safranfäden handelt es sich um die weiblichen Blütennarben, insbesondere die getrockneten üblicherweise roten Teile der Blütennarben der Safranpflanze (Crocus sativus, Iridaceae), die käuflich erhältlich sind. Die Extraktion von beispielsweise (insbesondere frisch) gemahlenen Safranfäden kann durch Ethanol oder wäßriges Ethanol (möglichst bei Temperaturen bis max. 50°C, vorzugsweise max. 40°C, und ca. 0,5 - 2 h) erfolgen, falls gewünscht gefolgt von Abfiltrieren, um cellulosefreie Safranbestandteile zu erhalten.

Als Monosaccharide können alle Monosaccharide mit mindestens vier Kohlenstoffatomen eingesetzt werden, die in der Regel durch die allgemeine Summenformel CₙH₂ₙOₙ mit n ≥ 4 wiedergegeben werden können. Vorzugsweise ist n 5 oder 6, insbesondere 6. Bevorzugte Monosaccharide sind Arabinose, Sorbose, Fructose und Glucose. Insbesondere bevorzugt ist Fructose (z.B. D-Fructose). Selbstverständlich können die verschiedenen Stereoisomeren der Monosaccharide gleichermaßen eingesetzt werden.

Als reduzierende Disaccharide können alle Disaccharide eingesetzt werden, in denen zwei Monosaccharide in der Weise glycosidisch miteinander verknüpft sind, daß die Glycosidbindung durch eine halbacetalische bzw. halbketalische Hydroxylgruppe des einen Monosaccharids und durch eine alkoholische (nicht halbacetalische oder halbketalische) Hydroxylgruppe des anderen Monosaccharids gebildet wird (siehe z.B. H. Beyer, W. Walter, Lehrbuch der organischen Chemie, 18. Auflage, S. 383, 384, S. Hirzel Verlag Stuttgart, 1976). Diese Disaccharide weisen in der Regel die allgemeine Summenformel C_{x+y}H_{2(x+y)-2} O_{(x+y)-1} auf, wobei x und y unabhängig voneinander größer oder gleich 4 sind. Vorzugsweise sind x und y 5 oder 6, insbesondere 6. Beispiele geeigneter reduzierender Disaccharide sind: Lactose und Maltose. Bevorzugt ist Lactose. Selbstverständlich können die verschiedenen Stereoisomeren der reduzierenden Disaccharide gleichermaßen eingesetzt werden. Die Disaccharide ebenso wie die Monosaccharide sind üblicherweise käuflich erhältlich und/oder können nach Standardverfahren hergestellt und gereinigt werden.

Bevorzugt enthält die erfindungsgemäße Zusammensetzung weiterhin Wasser (vorzugsweise demineralisiertes Wasser). Beispielsweise kann das Monosaccharid als gesättigte wäßrige Lösung und/oder das reduzierende Disaccharid als hochkonzentrierte wäßrige Lösung zur Zubereitung der erfindungsgemäßen Zusammensetzungen eingesetzt werden.

Weiterhin kann die erfindungsgemäße Zusammensetzung Ethanol enthalten, wobei dann die Anwesenheit von Wasser nicht unbedingt notwendig ist. Als Ethanol kann 100%iges Ethanol, vorzugsweise jedoch 96%iges Ethanol, verwendet werden.

Ethanol kann auch in Form einer hochprozentigen Spirituose, mit geringem Gehalt an ätherischen Ölen wie z.B. Cognac (z.B. 2.Brand, Herzstück, ca. 70 Vol.-% Ethanol), Whisky (z.B. 2.Brand, Herzstück, ca. 70 Vol.-% Ethanol) oder Rum (z.B. Jamaica, ca. 75 Vol.-%) verwendet werden.

Das Gewichtsverhältnis von Safran und/oder Safranbestandteilen zur Summe aus Mono- und reduzierenden Disacchariden beträgt 1 zu 100 bis 800, vorzugsweise 200 bis 500, insbesondere 300 bis 400 und ca. 320 (bezogen auf Trockengewicht von Safran und Sacchariden).

Dabei ist es bevorzugt, daß pro Gramm Safran und/oder Safranbestandteilen 100 bis 500 g (vorzugsweise 200 - 400 g, insbesondere 250 - 300 g) Monosaccharide und 20 bis 150 g (vorzugsweise 50 - 100, insbesondere 60 - 80 g) reduzierende Disaccharide vorhanden sind (wiederum bezogen auf Trockengewicht von Safran und Sacchariden). Die Konzentration von Safran und/oder Safranbestandteilen in den erfindungsgemäßen Zusammensetzungen ist meist kleiner als 1 Gewichtsprozent, vorzugsweise 0,05 bis 0,15 Gewichtsprozent, bezogen auf die Zusammensetzung aus Safran und/oder Safranbestandteilen, einem oder mehreren Monosacchariden mit mindestens vier Kohlenstoffatomen und wenigstens einem reduzierenden Disaccharid sowie gegebenenfalls Ethanol und/oder Wasser. In Zusammensetzungen, in denen nur Safran/Safranbestandteile, Monosaccharid und reduzierendes Disaccharid vorliegen, wird die Safran/Safranbestandteile-Konzentration höher sein (z.B. ca. 0,8 Gew.-%), während sie bei Anwesenheit von Wasser und/oder Ethanol niedriger ist (z.B. 0,05 - 0,15 Gew.-%). Der Gehalt an Ethanol und Wasser in den erfindungsgemäßen Zusammensetzungen variiert in Abhängigkeit von der eingesetzten Menge an Ethanol bzw. Wasser (vorzugsweise demineralisiertes Wasser) sowie, insbesondere im Falle des Ethanols wegen seiner Flüchtigkeit, in Abhängigkeit von den zur Herstellung der Zusammensetzungen angewandten speziellen Verfahrensbedingungen. So können z.B. Ethanol und/oder Wasser während der Herstellung der erfindungsgemäßen Zusammensetzung durch Erwärmen teilweise oder vollständig verdampfen.

Die erfindungsgemäßen Zusammensetzungen können nach dem folgenden allgemeinen Verfahren hergestellt werden, wobei alle Materialien käuflich erhältlich sind (Die Reinheit der eingesetzten Materialien oder Zutaten muß bei Verwendung für Lebensmittel selbstverständlich den jeweiligen Lebensmittelrichtlinien, beispielsweise den EU-Lebensmittelrichtlinien, entsprechen.): Käufliche Safranfäden mit einem Trockengewicht von 1 g werden gemahlen und mit einem Sieb, vorzugsweise einem Kunststoffsieb der Siebfeinheit 12 bis 30 n/cm (Zahl von Kette/Schuß pro Erstreckung), gesiebt, nachgemahlen und erneut bis zur Erschöpfung der Menge gesiebt. Das so gewonnene Safranpulver wird mit 4 bis 8 ml Wasser (hier und im folgenden demineralisiertes Wasser) durchfeuchtet. Die wäßrige Suspension wird mit 20 bis 150 ml, vorzugsweise ca. 100 ml Ethanol (hier und im folgenden vorzugsweise 96 vol.-%ig) mazeriert, nach ca. 30 bis 120 Minuten erneut mit ca. 100 ml Ethanol versetzt und anschließend kurz im etwa 70°C heißen Wasserbad unter Schütteln erhitzt, wobei die Temperatur im Gefäß 50°C nicht übersteigen soll. In die Mischung werden nach dem Erkalten auf Zimmertemperatur 100 bis 500 g, vorzugsweise 250 g, des oder der Monosaccharide, vorzugsweise Fructose, eingetragen, und es wird geschüttelt. Anschließend wird die Mischung unter gelegentlichem Schütteln bis zur Sättigung der Lösung, in der Regel etwa 2 Stunden, aufbewahrt. Sodann wird eine übersättigte Lösung aus 20 bis 150 g, vorzugsweise etwa 70 g, des oder der reduzierenden Disaccharide, vorzugsweise Lactose, in einer 30-60 vol.-%igen, vorzugsweise etwa 50 vol.-%igen, Ethanol-Wasser-Mischung im Gewichts-Verhältnis von etwa 1:2 bis etwa 1:4, vorzugsweise etwa 1:3 zu der Mischung hinzugefügt. Die so entstehende Zubereitung wird bei Zimmertemperatur für mindestens etwa 12 Stunden aufbewahrt und währenddessen mindestens dreimal geschüttelt. Vor ihrer weiteren Verwendung in einer Schokolade, einem Schokoladenerzeugnis, einem Bonbon, einem Kuchen, einer Torte, einem Konditoreierzeugnis, einer Süßware (vorzugsweise kakaopulverfrei), einem Gelee, einer Marmelade, Konfitüre, Aspik, Essig oder einem sonstigen Lebensmittel wird die erfindungsgemäße Zubereitung jeweils aufgeschüttelt. Wahlweise kann vor der Weiterverarbeitung der erfindungsgemäßen Zusammensetzung ein Teil oder die gesamte Menge des verwendeten Ethanols und/oder des Wassers durch schonende und bekannte Verfahren, wie beispielsweise gelindes Erwärmen bei Normaldruck oder unter vermindertem Druck, aus der erfindungsgemäßen Zusammensetzung entfernt werden.

Die auf diese Weise erhaltenen erfindungsgemäßen Zusammensetzungen können dann zu verschiedenen Lebensmitteln oder Süßwaren weiterverarbeitet werden, in dem sie an einem geeigneten Punkt während der üblichen Herstellung des Lebensmittels oder der Süßware zugegeben oder auch mit dem fertigen Produkt vermischt werden. Die Konzentration der erfindungsgemäßen Zusammensetzung in dem fertigen Produkt beträgt in Abhängigkeit von dem Produkt und der gewünschten Geschmacksintensität vorzugsweise 0,2 bis 25 Gew.-%.

Beispielsweise können die auf diese Weise erhaltenen erfindungsgemäßen Zusammensetzungen zu der erfindungsgemäßen Schokolade, dem erfindungsgemäßen Schokoladenerzeugnis oder der erfindungsgemäßen Süßware weiterverarbeitet werden, indem die erfindungsgemäße Zusammensetzung in ein Gemenge aus Schokoladenbestandteilen oder aus schokoladenartigen Bestandteilen (vorzugsweise kakaopulverfrei) oder aus süßwarebildenden Bestandteilen eingerührt wird. Bei den Bestandteilen der Schokolade handelt es sich um die herkömmlich in (weißlichen) "weißen" Schokoladen enthaltenen Bestandteile, d.h. Kakaobutter und Emulgatoren sowie gegebenenfalls weitere Komponenten wie etwa Milcherzeugnisse, Sultaninen und/oder Rosinen oder dergleichen (siehe Römpp Lexikon Lebensmittel-Chemie, 1995, S. 757ff., Stichworte: Schokolade und Schokoladenerzeugnisse). Mögliche Bestandteile des Schokoladenerzeugnisses sind unter anderem Kakaobutter, Butter, Glucose, Magermilchpulver und andere üblicherweise in Schokoladenerzeugnissen enthaltene Bestandteile, wie sie beispielsweise in Römpps Lexikon Lebensmittelchemie, 1995, Seite 758 bis 760 unter dem Stichwort "Schokoladen-Erzeugnisse" aufgeführt werden. (Kakaobutter ist ein weißliches Fettgemisch, bei Zimmertemperatur ein rieselfähiges Granulat, das fast geschmacksneutral ist. Kakaopulver bleibt übrig, wenn man von der Kakaomasse die Kakaobutter heiß und unter Druck abpreßt. Es ist dunkel und schmeckt sehr intensiv und bitter, herb, so daß es vorzugsweise in den mit den erfindungsgemäßen Zusammensetzungen hergestellten Produkten nicht enthalten sein soll.) Als Süßwaren können neben Schokoladen und Schokoladenerzeugnissen auch Dauerbackwaren, Knabberartikel, Gelees, Marmeladen, Konfitüren, Speiseeis, Rohmassen und/oder angewirkte Rohmassen sowie Glasurmassen Verwendung finden. Je nach Ethanolgehalt der mit Hilfe des oben beschriebenen allgemeinen Verfahrens hergestellten erfindungsgemäßen Zusammensetzungen können die Schokoladen, Schokoladenerzeugnisse, Gelees, Marmeladen, Konfitüren und Süßwaren Ethanol enthalten. Die Konzentration der erfindungsgemäßen Zusammensetzung in dem Endprodukt (beispielsweise Schokolade) beträgt vorzugsweise 5 bis 15 Gew.-%, insbesondere 8 bis 10 Gew.-%.

Die durch das allgemeine Verfahren erhaltenen Zusammensetzungen können weiterhin zu den erfindungsgemäßen Bonbons verarbeitet werden, indem die erfindungsgemäße Zusammensetzung zu einer sich abkühlenden, geschmolzenen Bonbonmasse (hergestellt durch Verkochen von z.B. 50%igem Invertzuckersirup) vor und oberhalb des Erstarrungspunkts zugegeben wird und das entstehende Gemisch nach intensivem Verrühren schnell abgekühlt sowie in Bonbon-Formen gegossen wird. Die Konzentration der erfindungsgemäßen Zusammensetzung in dem Endprodukt (Bonbon) beträgt vorzugsweise 10 - 20 Gew.-%, insbesondere ca. 14 - 16 Gew.-%.

Weiterhin können die mit dem allgemeinen Verfahren hergestellten Zusammensetzungen zu einer erfindungsgemäßen Torte weiterverarbeitet werden, indem mindestens eine Lage (vorzugsweise 2 oder 3 Lagen) aus einer wäßrigen Verdünnung der erfindungsgemäßen Zusammensetzung zwischen Lagen von fertiggebackener Torte eingebracht wird und die Torte gegebenenfalls mit der erfindungsgemäßen geschmolzenen Schokolade oder dem erfindungsgemäßen Schokoladenerzeugnis übergossen wird. Die erfindungsgemäßen Kuchen und Konditoreierzeugnisse können beispielsweise auf analoge Weise durch Aufbringen oder Einbringen der erfindungsgemäßen Zusammensetzung bzw. von wäßrigen Verdünnungen der erfindungsgemäßen Zusammensetzung hergestellt werden. Je nach Ethanolgehalt der erfindungsgemäßen Zusammensetzung können die erfindungsgemäße Torte, der erfindungsgemäße Kuchen und das erfindungsgemäße Konditoreierzeugnis Ethanol enthalten.

Die Konzentration der erfindungsgemäßen Zusammensetzung in der wäßrigen Verdünnung beträgt üblicherweise von 1 bis 10 Gew.-%, vorzugsweise etwa 5 Gew.-%.

Zur Herstellung eines/einer erfindungsgemäßen Gelees, Konfitüre oder Marmelade wird Pektin in demineralisiertem Wasser aufgekocht und mit Fructose versetzt. Die erfindungsgemäße Zusammensetzung wird bei ca. 50°C eingerührt und die Mischung in passende (vorzugsweise zuvor sterilisierte) Gefäße abgefüllt, wobei vorzugsweise keimarm gearbeitet wird. Die Konzentration der erfindungegemäßen Zusammensetzung im Endprodukt (beispielsweise Gelee) beträgt vorzugsweise 2 - 10 Gew.-%, insbesondere 5 -7 Gew.-%. Neben einer Variation der Konzentration der erfindungsgemäßen Zusammensetzung kann auch die Pektinkonzentration variiert werden, wobei bei höheren Pektinkonzentrationen schnittfeste Gelees erhalten werden.

Durch Einrühren der erfindungsgemäßen Zusammensetzung in entfettete hochkonzentrierte Bouillon läßt sich Aspik herstellen.

Für die Herstellung von Essigen wird die erfindungsgemäße Zusammensetzung in einen käuflichen Essig (z.B. Weinessig) eingerührt, so daß die Konzentration der erfindungsgemäßen Zusammensetzung in dem fertigen Essig vorzugsweise 0,2 bis 2,0 Gew.-%, insbesondere 0,5 bis 1,5 Gew.-% beträgt.

Bei den verschiedenen hier beschriebenen Verfahren ist es bevorzugt, eine Prozeßtemperatur von 50°C nicht oder nur kurz zu überschreiten, soweit Safran und/oder Safranbestandteile betroffen sind, da bei höheren Temperaturen die duft- und geschmacksbildenden Komponenten des Safrans verstärkt verdampfen bzw. abgebaut werden, beispielsweise durch Glykosidabbau. Aus diesem Grunde ist auch die Aufbewahrung Safran enthaltender Produkte unter Lichtschutz empfehlenswert.

Die Erfindung wird durch die folgenden Beispiele weiter veranschaulicht.

### Beispiel 1:

### Herstellung einer Fructose und Lactose enthaltenden erfindungsgemäßen Zusammensetzung:

1 g (Trockengewicht) käufliche Safranfäden wird gemahlen und mit einem Kunststoffsieb der Siebfeinheit 12 bis 30 n/cm (Zahl von Kette/Schuß pro Erstreckung) gesiebt, nachgemahlen und erneut bis zur Erschöpfung der Menge gesiebt. Das so gewonnene Safranpulver wird mit 6 ml demineralisiertem Wasser durchfeuchtet, dann mit 100 ml 96 vol.-%igem Ethanol mazeriert, nach 75 Minuten erneut mit 100 ml 96 vol.-%igem Ethanol versetzt und kurz im 70°C heißen Wasserbad unter Schütteln erhitzt. Nach dem Erkalten auf Zimmertemperatur werden 250 g Fructose eingetragen, die Lösung wird geschüttelt und bis zur Sättigung 2 Stunden unter gelegentlichem Schütteln aufbewahrt. Sodann wird aus 70 g Lactose eine übersättigte Lösung in einer 50 vol.-%igen Mischung von 96 vol.-%igem Ethanol und demineralisiertem Wasser im Gewichts-Verhältnis von 1 : 3 hergestellt und diese übersättigte Lactoselösung zur Fructose-Safran-Mischung zugegeben. Die so entstandene Zubereitung wird bei Zimmertemperatur 12 Stunden aufbewahrt und dabei dreimal geschüttelt. Sie gleicht einer Aufschwemmung und wird jeweils vor der Verarbeitung zu Süßwaren aufgeschüttelt.

### Beispiel 2:

### Herstellung eines gelben Safranschokoladenerzeugnisses:

In 40 g geschmolzene, sich abkühlende Kakaobutter wird im Erstarrungsbereich ein Gemenge aus 10 g frischgeschmolzener Butter, 30 g Glucose und 2 g Magermilchpulver eingerührt. Nach Erhitzen knapp über den Schmelzbereich wird kaltgerührt, und knapp über dem Erstarrungsbereich werden 8 g der frisch aufgeschüttelten erfindungsgemäßen Zubereitung nach Beispiel 1 eingerührt. Das Gemisch wird in Schokoladenform gegossen.

### Beispiel 3:

### Herstellung von gelben Safranbonbons:

85 g 50gew.-%igen Invertzuckersirups werden zu Bonbonmasse verkocht, vor dem Erstarrungsbereich mit 15 g der frisch aufgeschüttelten erfindungsgemäßen Zubereitung nach Beispiel 1 rasch verrührt, in Bonbonform gegossen und anschließend einer Schnellkühlung unterzogen.

### Beispiel 4:

### Herstellung einer Safrantorte mit geringem Alkoholgehalt:

Teil A: 250 g Butter werden mit 200 g Glucose schaumig gerührt; anschließend werden vier Eier untergezogen.
Teil B: 300 g Mehl werden mit 100 g Stärke für Speisezwecke vermischt und durch ein Haushaltssieb gesiebt.
Teil C: Die Teile A und B werden vermischt. Der entstehende Teig wird in eine mit wenig Butter ausgestrichene Tortenform eingefüllt und im vorgeheizten Backofen bei einer Unterhitze von ca. 190°C 75 Minuten lang gebacken. Nach Abkühlen wird das Gebackene in vier horizontale Schichten geschnitten. Die zweite und die vierte Schicht wird mit einer 5gew.-%igen wäßrigen Verdünnung der frisch aufgeschüttelten erfindungsgemäßen Zubereitung nach Beispiel 1 bis zur Farbkonstanz, jedoch nicht mit mehr als dafür erforderlich, durchfeuchtet. Die Schichten werden wieder zusammengesetzt.

Das Schokoladenerzeugnis nach Beispiel 2 wird schonend geschmolzen und nach Belieben auf die Oberfläche des Gebackenen gegossen. Nach Erkalten des Schokoladengusses kann der Vorgang nach Kippen des Gebackenen auf einem Rost in gleicher Weise mit den Flanken des Gebackenen wiederholt werden.

### Beispiel 5:

### Herstellung von gelbem Safranessig:

99,1 g Weinessig mit einem Alkoholgehalt von weniger als 0,1 Vol.-% werden mit 0,9 g der frisch aufgeschüttelten erfindungsgemäßen Zubereitung nach Beispiel 1 vermischt und nach 24 Stunden filtriert.

Der erhaltene Essig ist knallgelb und schmeckt stark nach Safran.

### Beispiel 6:

### Herstellung eines alkoholhaltigen Safran-Gelees mit Fruchtzucker

Je nach gewünschter Konsistenz werden 1,5 bis 7 g Pektin mit 65 g demineralisiertem Wasser unter Rühren zum Kochen gebracht, mit 30 g Fructose versetzt und 5 Minuten weiter am Kochen gehalten. Die weitere Verarbeitung erfolgt keimarm und unter weitestgehendem Verschluß. Nach Abkühlung auf 50°C werden 6 g der aufgeschüttelten, erfindungsgemäßen, mit Cognac (2. Brand, Herzstück, ca. 70 Vol.-% Ethanol) hergestellten Zubereitung langsam eingerührt. Die Mischung wird sofort in sterilisierte Gefäße abgefüllt. Die Gefäße werden 24 Stunden bei Zimmertemperatur ruhig gestellt. Bei Pektinkonzentrationen von ca. 4-7 g können schnittfeste Gelees erhalten werden.

## Patentansprüche

1. Zusammensetzung, die enthält,
(a) Safran und/oder Safranbestandteile,
(b) ein oder mehrere Monosaccharide mit mindestens 4 Kohlenstoffatomen und
(c) wenigstens ein reduzierendes Disaccharid,
mit Ausnahme von Honigzusammensetzungen, die mindestens einen Stabilisator, mindestens ein Quellmittel und 0,01 bis 0,5 Gewichtsprozent (bezogen auf den Ausgangshonig) Safranderivate enthalten und deren Dichte 0,7 oder kleiner ist.

2. Zusammensetzung nach Anspruch 1, die weiterhin (d) Wasser enthält.

3. Zusammensetzung nach Anspruch 1 oder 2, die weiterhin (e) Ethanol enthält.

4. Zusammensetzung nach einem der Ansprüche 1 bis 3, welche Fructose als ein Monosaccharid und/oder Lactose als ein reduzierendes Disaccharid enthält.

5. Zusammensetzung nach einem der Ansprüche 1 bis 4, worin das Gewichtsverhältnis von Safran und/oder Safranbestandteilen zur Summe aus Mono- und reduzierenden Disacchariden 1 zu 100 bis 800, vorzugsweise 200 bis 500 beträgt.

6. Zusammensetzung nach Anspruch 5, worin pro Gramm Safran und/oder Safranbestandteile 100 bis 500 g Monosaccharide und 20 bis 150 g reduzierendes Disaccharid vorhanden sind.

7. Zusammensetzung nach einem der Ansprüche 1 bis 6, worin die Konzentration von Safran und/oder Safranbestandteilen kleiner 1 Gew.-%, vorzugsweise 0,05-0,15 Gew.-%, bezogen auf die Zusammensetzung aus (a), (b), (c) und gegebenenfalls (d) und/oder (e) beträgt.

8. Schokolade, Schokoladenerzeugnis, Bonbon, Kuchen, Torte, Konditoreierzeugnis, Süßware, Gelee, Marmelade, Konfitüre, Aspik, Essig oder sonstiges Lebensmittel, dadurch gekennzeichnet, daß sie/es/er eine Zusammensetzung nach einem der Ansprüche 1 bis 7 enthält.

9. Verfahren zur Herstellung einer Zusammensetzung die
(a) Safran und/oder Safranbestandteile,
(b) ein oder mehrere Monosaccharide mit mindestens 4 Kohlenstoffatomen und
(c) wenigstens ein reduzierendes Disaccharid enthält,
dadurch gekennzeichnet, daß
- Safran und/oder Safranbestandteile gemahlen,
- mit Ethanol und gegebenenfalls Wasser mazeriert und erwärmt werden,
- in dieses Gemisch ein oder mehrere Monosaccharide mit mindestens vier Kohlenstoffatomen eingetragen und gegebenenfalls geschüttelt werden und anschließend
- mindestens ein reduzierendes Disaccharid eingetragen wird,
- wobei pro 1 g Trockensubstanz Safran und/oder Safranbestandteile 100 bis 500 g des oder der Monosaccharide und
- pro 1 g Trockensubstanz Safran und/oder Safranbestandteile 20 bis 150 g des oder der reduzierenden Disaccharide verwendet werden.

10. Verfahren zur Herstellung einer Schokolade oder eines Schokoladenerzeugnisses nach Anspruch 8, dadurch gekennzeichnet, daß in ein Gemenge aus Schokoladenbestandteilen oder schokoladenartigen Bestandteilen eine Zusammensetzung nach einem der Ansprüche 1 bis 7 eingerührt wird.

11. Verfahren zur Herstellung eines Bonbons nach Anspruch 8, dadurch gekennzeichnet, daß zu einer sich abkühlenden, geschmolzenen Bonbonmasse vor dem Erstarrungspunkt eine Zusammensetzung nach einem der Ansprüche 1 bis 7 zugegeben und das entstehende Gemisch nach Verrühren schnell abgekühlt wird.

12. Verfahren zur Herstellung einer Torte nach Anspruch 8, dadurch gekennzeichnet, daß mindestens eine Lage aus einer wäßrigen Verdünnung einer Zusammensetzung nach einem der Ansprüche 1 bis 7 zwischen Lagen von fertig gebackener Torte eingebracht wird und die Torte gegebenenfalls mit einer geschmolzenen Schokolade gemäß Anspruch 8 übergossen wird.

13. Verfahren zur Herstellung eines Gelees nach Anspruch 8, dadurch gekennzeichnet, daß Pektin in Wasser zum Kochen erhitzt und mit Fructose versetzt, zu der Mischung eine Zusammensetzung nach einem der Ansprüche 1 bis 7 zugegeben und das resultierende Produkt gegebenenfalls vor dem Abkühlen in Gefäße abgefüllt wird.

14. Verfahren zur Herstellung eines Essigs nach Anspruch 8, dadurch gekennzeichnet, daß eine Zusammensetzung nach einem der Ansprüche 1 bis 7 mit Essig vermischt wird.

15. Verfahren zur Herstellung von Aspik nach Anspruch 8, dadurch gekennzeichnet, daß eine Zusammensetzung nach einem der Ansprüche 1 bis 7 in entfettete hochkonzentrierte Bouillon eingerührt wird.

16. Verwendung einer Zusammensetzung nach einem der Ansprüche 1 bis 7 zur Herstellung von Schokolade, Schokoladenerzeugnis, Bonbon, Kuchen, Torte, Konditoreierzeugnis, Gelee, Marmelade, Konfitüre, Aspik, Süßware, Essig oder einem sonstigen Lebensmittel.

## Claims

1. Composition which contains,
(a) saffron and/or saffron ingredients
(b) one or more monosaccharides with at least 4 carbon atoms and
(c) at least one reducing disaccharide,
with the exception of honey compositions which contain at least one stabilizer, at least one foaming agent and 0.01 to 0.5 wt.-% (based on the starting honey) of saffron derivatives and whose density is 0.7 or less.

2. Composition according to claim 1 which also (d) contains water.

3. Composition according to claim 1 or 2 which also (e) contains ethanol.

4. Composition according to one of claims 1 to 3 which contains fructose as a monosaccharide and/or lactose as a reducing disaccharide.

5. Composition according to one of claims 1 to 4 in which the weight ratio of saffron and/or saffron ingredients to the sum of mono- and reducing disaccharides is 1 to 100 to 800, preferably 200 to 500.

6. Composition according to claim 5 in which 100 to 500 g of monosaccharides and 20 to 150 g of reducing disaccharide are present per gram of saffron and/or saffron ingredients.

7. Composition according to one of claims 1 to 6 in which the concentration of saffron and/or saffron ingredients is less than 1 wt.-%, preferably 0.05 - 0.15 wt.-%, related to the composition comprising (a), (b), (c) and optionally (d) and/or (e).

8. Chocolate, chocolate product, sweet, cakes, gateau, cake-shop product, confection, jelly, marmalade, jam, aspic, vinegar or other food, characterized in that it contains a composition according to one of claims 1 to 7.

9. Process for the preparation of a composition, which contains
(a) saffron and/or saffron ingredients,
(b) one or more monosaccharides with at least 4 carbon atoms and
(c) at least one reducing disaccharide,
characterized in that
- saffron and/or saffron ingredients are ground,
- macerated with ethanol and optionally water, and heated
- one or more monosaccharides with at least four carbon atoms are introduced into this mixture and optionally shaken and finally
- at least one reducing disaccharide is added,
- 100 to 500 g of the monosaccharide(s) being used per 1 g of dry substance of saffron and/or saffron ingredients and
- 20 to 150 g of the reducing disaccharide(s) being used per 1 g of dry substance of saffron and/or saffron ingredients.

10. Process for the preparation of a chocolate or a chocolate product according to claim 8, characterized in that a composition according to one of claims 1 to 7 is stirred into a mixture of chocolate ingredients or chocolate-type ingredients.

11. Process for the preparation of a sweet according to claim 8, characterized in that a composition according to one of claims 1 to 7 is added to a cooling, melted sweet composition before the solidification point, and the resulting mixture is cooled quickly after stirring.

12. Process for the preparation of a gateau according to claim 8, characterized in that at least one layer of an aqueous dilution of a composition according to one of claims 1 to 7 is introduced between layers of ready-baked gateau and a melted chocolate according to claim 8 is optionally poured over the gateau.

13. Process for the preparation of a jelly according to claim 8, characterized in that pectin is brought to the boil in water and mixed with fructose, a composition according to one of claims 1 to 7 is added to the mixture and the resulting product is optionally poured into containers before cooling.

14. Process for the preparation of a vinegar according to claim 8, characterized in that a composition according to one of claims 1 - 7 is mixed with vinegar.

15. Process for the preparation of aspic according to claim 8, characterized in that a composition according to one of claims 1 - 7 is stirred into degreased highly concentrated stock.

16. Use of a composition according to one of claims 1 to 7 for the preparation of a chocolate, chocolate product, sweet, cake, gateau, cake-shop product, jelly, marmalade, jam, aspic, confection, vinegar or another food.

## Revendications

1. Composition, qui contient
(a) du safran et/ou des constituants du safran,
(b) un ou plusieurs monosaccharides comprenant au moins 4 atomes de carbone et
(c) au moins un disaccharide réducteur,
à l'exception de compositions de miel, qui contiennent au moins un stabilisateur, au moins un agent de gonflement et 0,01 à 0,5% en poids (par rapport au miel de départ) de dérivés de safran et dont la densité est égale ou inférieure à 0,7.

2. Composition selon la revendication 1, qui contient en outre (d) de l'eau.

3. Composition selon les revendications 1 ou 2, qui contient en outre (e) de l'éthanol.

4. Composition selon l'une quelconque des revendications 1 à 3, qui contient du fructose comme monosaccharide et/ou du lactose comme disaccharide réducteur.

5. Composition selon l'une quelconque des revendications 1 à 4, dans laquelle le rapport pondéral de safran et/ou de constituants de safran à la somme des monosaccharides et des disaccharides réducteurs est de 1 à 100 jusqu'à 800, de préférence de 200 jusqu'à 500.

6. Composition selon la revendication 5, dans laquelle 100 à 500 g de monosaccharide et 20 à 150 g de disaccharide réducteur sont présents par gramme de safran et/ou de constituants de safran.

7. Composition selon l'une quelconque des revendications 1 à 6, dans laquelle la concentration en safran et/ou en constituants de safran est inférieure à 1% en poids, de préférence de 0,05 à 0,15% en poids, par rapport à la composition de (a), (b), (c) et, le cas échéant, (d) et/ou (e).

8. Chocolat, produit chocolaté, bonbon, gâteau, tarte, produit pâtissier, confiserie, gelée, marmelade, confiture, aspic, vinaigre ou autre aliment, caractérisé en ce qu'il/elle contient une composition selon l'une quelconque des revendications 1 à 7.

9. Procédé pour la préparation d'une composition qui contient
(a) du safran et/ou des constituants du safran,
(b) un ou plusieurs monosaccharides comprenant au moins 4 atomes de carbone et
(c) au moins un disaccharide réducteur, caractérisé
- en ce qu'on broie le safran et/ou les constituants du safran,
- en ce qu'on les macère avec de l'éthanol et le cas échéant avec de l'eau et on les chauffe,
- en ce qu'on introduit dans ce mélange un ou plusieurs monosaccharides comprenant au moins quatre atomes de carbone et on les agite le cas échéant et
- en ce qu'on introduit ensuite au moins un disaccharide réducteur,
- par 1 g de substance sèche de safran et/ou de constituants de safran, 100 à 500 g du monosaccharide ou des monosaccharides étant utilisés et
- par 1 g de substance sèche de safran et/ou de constituants de safran, 20 à 150 g du disaccharide réducteur ou des disaccharides réducteurs étant utilisés.

10. Procédé pour la préparation d'un chocolat ou d'un produit chocolaté selon la revendication 8, caractérisé en ce qu'on délaye de manière homogène une composition selon l'une quelconque des revendications 1 à 7 dans un mélange de constituants de chocolat ou de constituants de type chocolat.

11. Procédé pour la préparation d'un bonbon selon la revendication 8, caractérisé en ce qu'on ajoute une composition selon l'une quelconque des revendications 1 à 7 à une masse de bonbon fondue en cours de refroidissement, avant le point de solidification et le mélange se formant est refroidi rapidement après agitation.

12. Procédé pour la préparation d'une tarte selon la revendication 8, caractérisé en ce qu'on introduit au moins une couche d'une dilution aqueuse d'une composition selon l'une quelconque des revendications 1 à 7 entre des couches de tarte complètement cuite et que la tarte est le cas échéant glacée avec un chocolat fondu selon la revendication 8.

13. Procédé pour la préparation d'une gelée selon la revendication 8, caractérisé en ce qu'on chauffe à ébullition de la pectine dans de l'eau et on la mélange avec du fructose, on ajoute au mélange une composition selon l'une quelconque des revendications 1 à 7 et on met le cas échéant le produit obtenu avant le refroidissement dans des récipients.

14. Procédé pour la préparation d'un vinaigre selon la revendication 8, caractérisé en ce qu'on mélange une composition selon l'une quelconque des revendications 1 à 7 avec du vinaigre.

15. Procédé pour la préparation d'aspic selon la revendication 8, caractérisé en ce qu'on délaye de manière homogène une composition selon l'une quelconque des revendications 1 à 7 dans un bouillon fortement concentré dégraissé.

16. Utilisation d'une composition selon l'une quelconque des revendications 1 à 7 pour la préparation de chocolat, de produit chocolaté, de bonbon, de gâteau, de tarte, de produit pâtissier, de gelée, de marmelade, de confiserie, d'aspic, de sucrerie, de vinaigre ou d'un autre aliment.
